Europäisches Patentamt

European Patent Office

Office européen des brevets

(19)

(11) Veröffentlichungsnummer : **0 126 102**
**B1**

(12) **EUROPÄISCHE PATENTSCHRIFT**

(45) Veröffentlichungstag der Patentschrift :
**28.05.86**

(21) Anmeldenummer : **83903520.1**

(22) Anmeldetag : **15.11.83**

(86) Internationale Anmeldenummer :
**PCT/EP 83/00302**

(87) Internationale Veröffentlichungsnummer :
**WO/8401923 (24.05.84 Gazette 84/13)**

(51) Int. Cl.⁴ : **B 62 D 55/06, B 62 D 55/08,
B 62 D 55/24, B 62 D 55/28,
B 60 B 19/00**

(54) Profillauffläche für ein Motorfahrzeug.

Verbunden mit 83111454.1/0109095 (europäische Anmeldenummer/Veröffentlichungsnummer) durch Entscheidung vom 24.06.85.

(30) Priorität : **16.11.82 DE 3242408**

(43) Veröffentlichungstag der Anmeldung :
**28.11.84 Patentblatt 84/48**

(45) Bekanntmachung des Hinweises auf die Patenterteilung : **28.05.86 Patentblatt 86/22**

(84) Benannte Vertragsstaaten :
**AT BE CH DE FR GB IT LI LU NL SE**

(56) Entgegenhaltungen :
**FR-A-   640 138
FR-E-   34 571
US-A- 4 223 753**

(73) Patentinhaber : **Wössner, Heinz**

**D-7605 Bad Peterstal-Griesbach (DE)**

(72) Erfinder : **Wössner, Heinz**

**D-7605 Bad Peterstal-Griesbach (DE)**

(74) Vertreter : **Vogeser, Werner, Dipl.-Ing. et al
Patentanwälte Hansmann & Vogeser
Albert-Rosshaupter-Strasse 65
D-8000 München 70 (DE)**

## Beschreibung

Die Erfindung betrifft eine Profillauffläche entsprechend dem Oberbegriff des Anspruchs 1.

Derartige Profillaufflächen haben beim Befahren eines ebenen Bodens den Nachteil einer geringen Laufruhe. Ein besonderer Nachteil ergibt sich beim Kurvenfahren oder beim Drehen auf der Stelle, da dadurch die Bodenoberfläche erheblich beschädigt wird. Diese Probleme ergeben sich sowohl bei mit derartigen Profilflächen versehenen Raupen- oder Kettenfahrzeugen als auch bei Fahrzeugen, bei denen die Profillaufflächen an den Laufrädern gebildet sind.

Zur Verbesserung der Laufruhe bei Profillaufflächen ist es aus der FR-A-640 138 bekannt, ein Raupenband mit quer zur Laufrichtung versetzten, sich im mittleren Bereich überdeckenden Stollen auszubilden. Durch eine derartige Ausbildung wird zwar die Laufruhe verbessert, jedoch die Geländegängigkeit verringert.

Der Erfindung liegt die Aufgabe zugrunde, ein Fahrzeug zu schaffen, das eine hohe Geländegängigkeit hat, gleichzeitig sich aber durch hohe Laufruhe beim Befahren von ebenen Flächen auszeichnet.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Die Aufteilung der Profillauffläche in zwei Teilprofile, die in Laufrichtung relativ zueinander verstellbar sind, ergibt die Möglichkeit, die Profilstücke der beiden Teilprofile derart relativ zueinander anzuordnen, daß die Profilstücke des einen Teilprofils zwar seitlich versetzt, sich jedoch in Höhe der Zwischenräume zwischen den Profilstücken des anderen Teilprofils befinden. Damit liegt das Fahrzeug gleichzeitig mit den Profilstücken beider Teilprofile auf dem Boden auf.

Die Verwirklichung der Teilprofile kann in der Praxis auf verschiedene Art erfolgen. Z. B. können die Teilprofile an zwei nebeneinander liegenden gleichachsigen Laufrädern ausgebildet sein. Diese beiden je ein Teilprofil aufweisenden Laufräder können z. B. das Hinterrad eines Motorrades bilden. Es ist aber auch möglich, die Teilprofile bei Raupen- bzw. Kettenfahrzeugen vorzusehen. In diesem Falle hat das Fahrzeug an beiden Längsseiten je zwei Raupenbänder, die jeweils ein Teilprofil aufweisen. Weiterhin ist es möglich, die Teilprofile einer Profillauffläche aus einem Laufrad und einem Raupenband zu bilden.

Bei allen Anwendungsfällen ergibt sich eine relativ hohe Laufruhe, wenn die Teilprofile relativ zueinander versetzt sind, da dann die Lücken zwischen den Profilstücken des einen Teilprofils durch die Profilstücke des anderen Teilprofils ausgeglichen werden. Die Laufruhe führt nicht nur zu einer geringeren Erschütterung des Fahrzeuges selbst, sondern auch zu einer verminderten Geräuschentwicklung. Wegen der günstigeren Lastverteilung führt das Kurvenfahren und das Drehen auf der Stelle zu einer weitaus geringeren Beschädigung der Bodenoberfläche durch das Fahrzeug.

Werden die Profillaufflächen derart verstellt, daß die Profilstücke nebeneinander liegen, hat das Fahrzeug die Geländegängigkeit üblicher derartiger bekannter Fahrzeuge.

Zweckmäßigerweise sind die Teilprofile einer Profillauffläche um wenigstens die Hälfte des Mittenabstandes zweier aufeinanderfolgender Profilstücke verstellbar, so daß die Profilstücke des einen Teilprofils auf die Mitte zwischen den Profilstücken des anderen Teilprofils eingestellt werden können. Der Zwischenraum zwischen den Profilstücken sollte nach Größe und Form etwa den Profilstücken selbst entsprechen.

Die Erfindung wird nachstehend anhand der Fig. 1 bis 8 beispielsweise erläutert. Es zeigen :

Figur 1 bis 4 Seitenansichten zweier je ein Teilprofil einer Profillauffläche aufweisender Laufräder in Laufrichtung und quer zur Laufrichtung, und

Figur 5 bis 8 entsprechende Darstellungen zweier Laufräder, über die je ein Raupenband läuft.

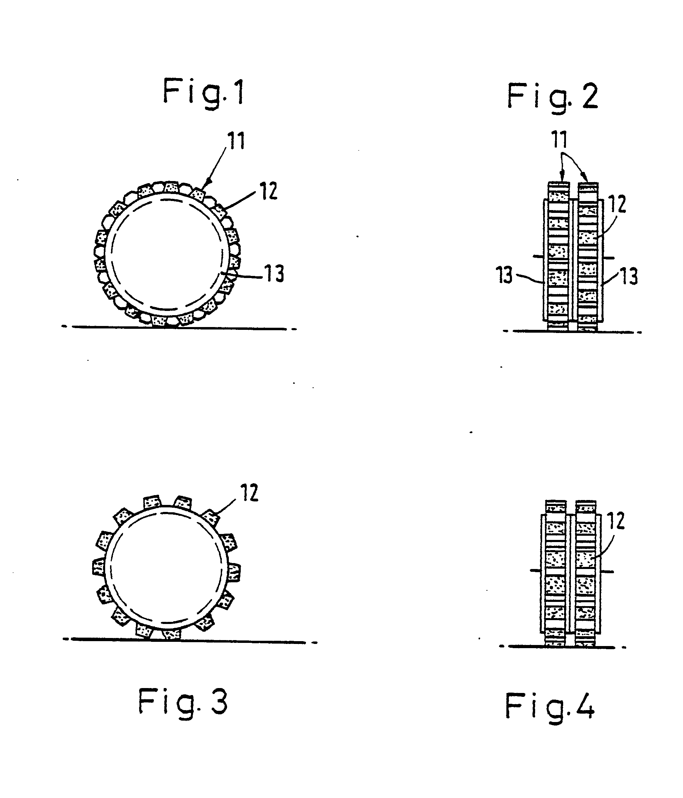

Die Fig. 1 bis 4 zeigen die Ausbildung einer Profillauffläche an zwei gleichachsigen Laufrädern 13. Jedes Laufrad 13 hat ein Teilprofil 11. Die beiden Teilprofile der Laufräder bilden zusammen eine Profillauffläche. Beide Laufräder sind relativ zueinander drehbar und damit die Teilprofile relativ zueinander verstellbar. Die Teilprofile bestehen aus Profilstücken bzw. Stollen 12, deren Abstand etwa gleich der Breite der Stollen ist. Der Zwischenraum zwischen den Stollen 12 ist komplementär zu den Stollen geformt. In den Fig. 1 und 2 ist die Betriebsstellung der Laufräder gezeigt, in der sich ein mit solchen Rädern ausgestattetes Fahrzeug, z. B. ein Motorrad, dessen Hinterrad diese beiden Laufräder aufweist, auf ebenem Boden bewegt. In diesem Falle sind die Stollen 12 derart gegeneinander versetzt, daß sich jeweils die Stollen des einen Teilprofils auf der Höhe der Zwischenräume zwischen den Stollen des anderen Teilprofils befinden. Damit kommen die beiden Laufräder mit ihren Stollen abwechselnd vollständig und im Bereich der Zwischenräume zwischen den Stollen teilweise zur Auflage.

Die Fig. 3 und 4 zeigen die Betriebsstellung für Geländefahrt, in der die Stollen und die Zwischenräume zwischen diesen miteinander fluchten.

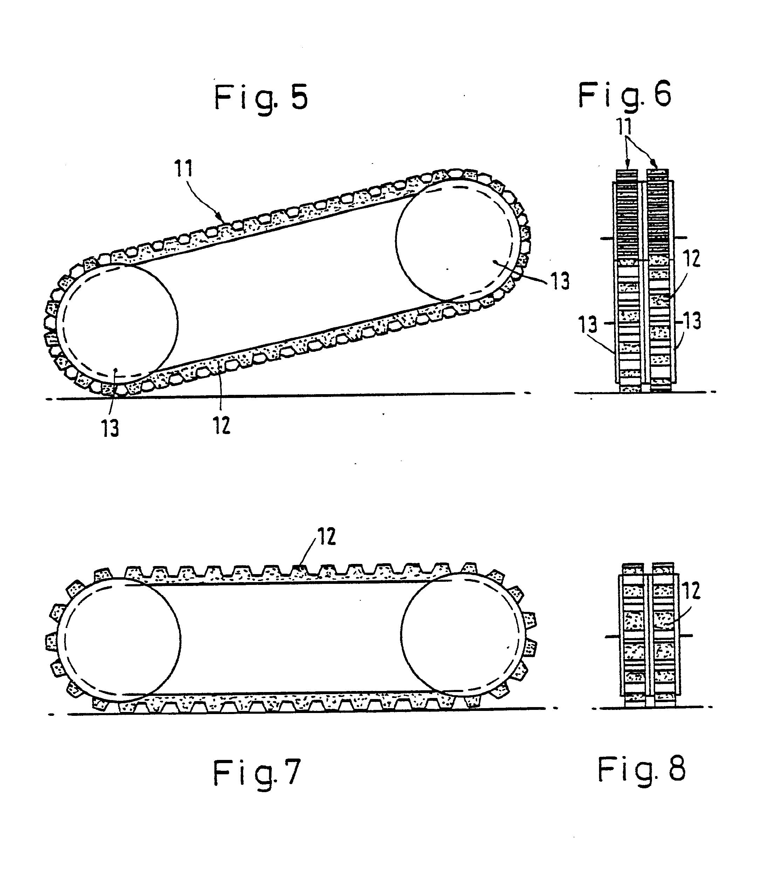

Die Fig. 5 bis 8 zeigen die Ausbildung der Teilprofile 11 einer Profillauffläche an Raupenbändern, die über zwei hintere und zwei vordere Laufräder geführt sind.

Die Fig. 5 und 6 zeigen die Betriebsstellung der relativ zueinander verschiebbaren Raupenbänder in der Betriebsstellung für das Befahren einer ebenen Bodenfläche. Die vorderen Laufräder sind dabei durch Schwenken des Fahrgestells um die Hinterachse nach oben verstellt, so daß sich bezüglich der Auflagefläche ähnliche Verhältnisse wie bei den mit Stollen versehenen Laufrädern in den Fig. 1 und 2 ergeben, d. h., daß sich ein mit solchen Raupenbändern ausgestattetes Raupenfahrzeug ähnlich wie ein mit normalen Laufrädern versehenes Fahrzeug bewegen läßt. Selbstverständlich ist in diesem Falle noch wenigstens ein zusätzliches, nicht gezeigtes Lenkrad erforderlich, mit dem sich das Fahrzeug ebenfalls am Boden abstützt. Gegenüber normalen Raupenfahrzeugen ergibt sich dabei der Vorteil, daß aufgrund der günstigen Belastungsverteilung die Beschädigung der Bodenoberfläche gering gehalten werden kann.

Die Fig. 7 und 8 zeigen wiederum die Betriebsstellung, in der sich das Fahrzeug im Gelände bewegt, d. h., daß die Profilstücke bzw. Stollen 12 der Raupenbänder sowie die Zwischenräume zwischen diesen aufeinander ausgerichtet sind. Das Fahrgestell ist in dieser Betriebsstellung wieder in die normale horizontale Lage geschwenkt. Das nicht gezeigte Lenkrad kann ebenfalls am Boden aufliegen oder abgehoben sein.

## Patentansprüche

1. Profillauffläche für ein Motorfahrzeug mit einer Querprofilierung, deren Profilstücke in Form von Stollen, Querrippen oder dergleichen in Laufrichtung unter Abstand angeordnet sind, gekennzeichnet durch zwei Teilprofile (11), die in Laufrichtung relativ zueinander verstellbar sind.

2. Profillauffläche nach Anspruch 1, dadurch gekennzeichnet, daß die Teilprofile (11) um wenigstens die Hälfte des Mittenabstandes zweier aufeinanderfolgender Profilstücke (12) verstellbar sind.

3. Profillauffläche nach Anspruch 1 oder 2, dadurch gekennzeichnet, daß die Teilprofile (11) an gleichachsigen Laufrädern (13) ausgebildet sind.

4. Profillauffläche nach Anspruch 1 oder 2, dadurch gekennzeichnet, daß die Teilprofile (11) an Raupenbändern ausgebildet sind.

5. Anwendung einer Profillauffläche nach Anspruch 4 für ein Raupenfahrzeug, dadurch gekennzeichnet, daß an jeder Fahrzeuglängsseite zwei je ein Teilprofil tragende Raupenbänder angeordnet sind.

6. Anwendung einer Profillauffläche nach Anspruch 5, dadurch gekennzeichnet, daß die Raupenbänder über wenigstens zwei Laufräder (13) geführt sind.

7. Anwendung einer Profillauffläche nach Anspruch 6, dadurch gekennzeichnet, daß die vorderen Laufräder (13) höhenverstellbar sind.

8. Anwendung einer Profillauffläche nach Anspruch 7, dadurch gekennzeichnet, daß das Fahrgestell um die Fahrzeughinterachse kippbar ist.

9. Anwendung einer Profillauffläche nach Anspruch 3 für ein Zweirad, dadurch gekennzeichnet, daß wenigstens hinten zwei je ein Teilprofil (11) aufweisende Laufräder (13) angeordnet sind.

10. Anwendung einer Profillauffläche nach Anspruch 3 für eine Sackkarre, dadurch gekennzeichnet, daß an beiden Fahrzeugseiten je zwei ein Teilprofil (11) aufweisende Laufräder (13) angeordnet sind, die alle gleichachsig sind.

11. Profillauffläche nach einem der Ansprüche 1 bis 10, dadurch gekennzeichnet, daß der Abstand zwischen den Profilstücken (12) der Teilprofile etwa gleich der Breite der Profilstücke ist.

12. Profillauffläche nach Anspruch 11, dadurch gekennzeichnet, daß die Form des Zwischenraums zwischen den Profilstücken (12) komplementär zur Form der Profilstücke ist.

13. Profillauffläche nach Anspruch 1, dadurch gekennzeichnet, daß die Teilprofile einer Profillauffläche aus einem Laufrad und einem Raupenband gebildet sind.

## Claims

1. Treaded running surface for a motor vehicle, the surface having a transverse profiling comprising tread pieces in the form of studs, transverse ribs or the like and arranged spaced apart in the running direction, characterised by two part treads (11) which are adjustable relative to one another in the running direction.

2. Treaded running surface according to claim 1, characterised in that the part treads (11) are adjustable by at leat half of the distance between the mid-points of two successive tread pieces (12).

3. Treaded running surface according to claim 1 or 2, characterised in that the part treads (11) are formed on co-axial running wheels (13).

4. Treaded running surface according to claim 1 or 2, characterised in that the part treads (11) are formed on track laying vehicle tracks.

5. Use of a treaded running surface according to claim 4 for a track laying vehicle, characterised in that two tracks each carrying a part tread are arranged on each longitudinal side of the vehicle.

6. Use of a treaded running surface according to claim 5, characterised in that the tracks are guided over at least two running wheels (13).

7. Use of a treaded running surface according to claim 6, characterised in that the forward running wheels (13) are adjustable in height.

8. Use of a treaded running surface according to claim 7, characterised in that the chassis is tiltable about the vehicle rear axle.

9. Use of a treaded running surface according to claim 3 for a bicycle, characterised in that two running wheels (13) each having a part tread (11) are arranged at least at the rear.

10. Use of a treaded running surface according to claim 3 for a sack cart, characterised in that two running wheels (13) each having a part tread (11) are arranged on both sides of the vehicle, all the wheels being co-axial.

11. Treaded running surface according to any of claims 1 to 10, characterised in that the distance between the tread pieces (12) of the part treads is approximately equal to the width of the tread pieces.

12. Treaded running surface according to claim 11, characterised in that the shape of the intermediate space between the tread pieces (12) is complementary to the shape of the tread pieces.

13. Treaded running surface according to claim 1, characterised in that the part treads of a treaded running surface are formed from a running wheel and a caterpillar track.

## Revendications

1. Surface de roulement profilée pour un véhicule à moteur comportant un profilé transversal dont les pièces profilées sont disposées à une certaine distance dans le sens de mouvement sous la forme de saillies, nervures transversales ou analogues, caractérisée par deux profilés partiels (11) qui peuvent être déplacés dans le sens de la marche relativement l'un à l'autre.

2. Surface de roulement profilée selon la revendication 1, caractérisée en ce que les profilés partiels (11) peuvent être déplacés au moins de la moitié de la distance centrale de deux pièces profilées (12) qui se suivent.

3. Surface de roulement profilée selon la revendication 1 ou la revendication 2, caractérisée en ce que les profilés partiels (11) sont conformés sur des roues de marche (13) ayant le même axe.

4. Surface de roulement profilée selon la revendication 1 ou la revendication 2, caractérisée en ce que les profilés partiels (11) sont conformés sur des bandes à chenille.

5. Utilisation d'une surface de roulement profilée selon la revendication 4 pour un véhicule à chenille, caractérisée en ce que sur chaque côté longitudinal du véhicule, sont disposées des bandes à chenille portant un profilé partiel respectif.

6. Utilisation d'une surface de roulement profilée selon la revendication 5, caractérisée en ce que les bandes à chenilles sont guidées sur au moins deux roues de marche (13).

7. Utilisation d'une surface de roulement profilée selon la revendication 6, caractérisée en ce que les roues de marche antérieures (13) peuvent se déplacer en hauteur.

8. Utilisation d'une surface de roulement profilée selon la revendication 7, caractérisée en ce que le bâti du véhicule peut basculer autour de l'axe postérieur du véhicule.

9. Utilisation d'une surface de roulement profilée selon la revendication 3 pour une bicyclette caractérisée en ce que, au moins derrière, sont disposées deux roues de marche (13) présentant un profilé partiel respectif (11).

10. Utilisation d'une surface de roulement profilée selon la revendication 3 pour un diable, caractérisée en ce que sur les deux côtés du véhicule sont disposées deux roues de marche respectives (13) présentant un profilé partiel (11) et qui ont le même axe.

11. Surface de roulement profilée selon l'une des revendications 1 à 10, caractérisée en ce que la distance entre les pièces profilées (12) des profilés partiels est à peu près égale à la largeur des pièces profilées.

12. Surface de roulement profilée selon la revendication 11, caractérisée en ce que la forme de l'intervalle entre les pièces profilées (12) est complémentaire de la forme des pièces profilées.

13. Surface de roulement profilée selon la revendication 1, caractérisée en ce que les profilés partiels d'une surface de roulement profilée sont formés par une roue de marche et par une bande à chenille.

# Fig.1

# Fig. 2

# Fig. 3

# Fig.4

1

Fig. 5

Fig. 6

Fig. 7

Fig. 8

2